# EUROPEAN PATENT APPLICATION

(11) **EP 2 348 683 A1**
(43) Date of publication of application: **27.07.2011**
(21) Application number: 09823001.4
(22) Date of filing: 26.05.2009
(51) Int. Cl.: H04L 12/66

(54) **A METHOD, SYSTEM AND GATEWAY FOR PREVENTING THE NETWORK ATTACK**

(30) Priority: 28.10.2008 CN 200810171999
(71) Applicant: Chengdu Huawei Symantec Technologies Co., Ltd., Sichuan 611731 (CN)
(72) Inventor: JIANG, Wu, Chengdun Sichuan 611731 (CN)
(74) Representative: Pfenning, Meinig & Partner GbR
(86) International application number: PCT/CN2009/071993
(87) International publication number: WO 2010/048808

(57) **Abstract**

A method, a system and a gateway for protection against network attacks are provided. The method includes: receiving source request information and destination request information that are sent by a client, where the destination request information is notified by a Domain Name System (DNS) to the client sending the source request information; checking the source request information and the destination request information; and discarding the source request information and the destination request information when the checking result is undesirable. Through the technical solution, the DNS selects the destination request information according to the source request information sent by the client, and establishes a corresponding relation between the client and a server according to a matching relation between the source request information and the destination request information, so as to prevent DDOS attacks.

## Description

The application claims priority to Chinese Patent Application No. 200810171999.0, filed on October 28, 2008, and entitled "METHOD, SYSTEM AND GATEWAY, DOMAIN NAME SYSTEM FOR PROTECTION AGAINST NETWORK ATTACKS", which is incorporated herein by reference in its entirety.

### FIELD OF THE TECHNOLOGY

The present invention relates to the field of communication technologies, and more particularly to a method, a system and a gateway for protection against network attacks.

### BACKGROUND OF THE INVENTION

A Distributed Denial of Service (DDOS) attack mainly refers to that an attacker uses a master host as a springboard (which may be multi-level and multi-layer) to control a lot of hosts which have been infected and controlled to form an attacking network, thereby making large-scale denial of service attacks against the victim hosts. The attack often amplifies the attack of a single attacker exponentially, which may not only greatly affects user hosts, but also cause serious network congestion.

The DDOS floods against the victim hosts by using the attacking network, so that the victim hosts are busy with handling sudden bursts of requests and can not normally respond to valid user requests, thereby resulting in breakdown.

At present, in order to prevent the DDOS, a cleaner is often connected in series in a network to clean traffic, and with the serial cleaning method, an effect of protection against the DDOS is achieved.

In the implementation of the present invention, the inventor found that the prior art has at least the following problems.

Single point failures may occur due to the serial connection of the cleaner in the network.

### SUMMARY OF THE INVENTION

Embodiments of the present invention provide a method, a system and a gateway for protection against network attacks, so as to achieve effective protection against DDOS attacks.

An embodiment of the present invention provides a method for protection against network attacks, where the method includes:
receiving source request information and destination request information that are sent by a client, where the destination request information is notified by a Domain Name System (DNS) to the client sending the source request information;
checking the source request information and the destination request information; and
discarding the source request information and the destination request information when the checking result is undesirable.

An embodiment of the present invention further provides a gateway, where the gateway includes:
a receiving module, configured to receive source request information and destination request information that are sent by a client, where the destination request information is notified by a DNS to the client sending the source request information;
a checking module, configured to check the source request information and the destination request information; and
a processing module, configured to discard the source request information and the destination request information when the checking result is undesirable.

An embodiment of the present invention further provides a system for protection against network attacks, where the system includes a client, a DNS, and a gateway.

The DNS is configured to receive source request information sent by the client, select destination request information according to the source request information, and notify the destination request information to the client, where the client sends the source request information and the destination request information to the gateway.

The gateway is configured to receive the source request information and the destination request information that are sent by the client, check the source request information and the destination request information, and discard the source request information and the destination request information when the checking result is undesirable.

Through the technical solution according to the embodiments of the present invention, the DNS selects the destination request information according to the source request information sent by the client, and establishes a corresponding relation between the client and the server according to a matching relation between the source request information and the destination request information, so as to prevent DDOS attacks. Since the DNS is not connected in series in the network, not only the attacks can be blocked effectively, but also single point failures can be avoided.

### BRIEF DESCRIPTION OF THE DRAWINGS

To make the technical solution of the present invention clearer, the accompanying drawings for illustrating the embodiments of the present invention are outlined below. Apparently, the accompanying drawings are for the exemplary purpose only, and person having ordinary skill in the art can derive other drawings from these accompanying drawings without creative effort.
FIG 1 is a flow chart of a method for protection against network attacks according to a first embodiment of the present invention;
FIG 2 is a flow chart of a method for protection against network attacks according to a second embodiment of the present invention;
FIG 3 is a schematic system diagram of the method for protection against network attacks according to an embodiment of the present invention;
FIG 4 is a schematic structural view of a system for protection against network attacks according to a third embodiment of the present invention;
FIG. 5 is a schematic structural view of a gateway according to a fourth embodiment of the present invention; and
FIG. 6 is a schematic structural view of a DNS according to a fifth embodiment of the present invention.

### DETAILED DESCRIPTION OF THE EMBODIMENTS

The technical solution under the present invention is elaborated below with reference to accompanying drawings. Evidently, the embodiments described below are for the exemplary purpose only, and are only part of rather than all embodiments of the present invention. Additionally, all other embodiments, which can be derived by those skilled in the art from the embodiments given herein without creative efforts, fall within the protection scope of the present invention.

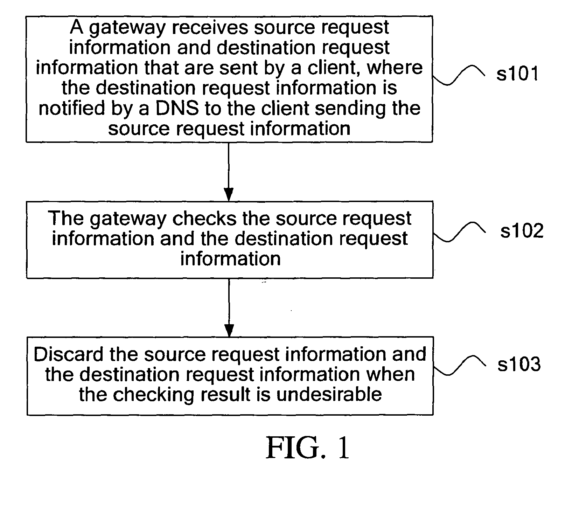

As shown in FIG 1, in a first embodiment, the present invention provides a method for protection against network attacks, where the method includes the following steps.

In step s101, a gateway receives source request information and destination request information that are sent by a client, where the destination request information is notified by a DNS to the client sending the source request information.

In step s 102, the gateway checks the source request information and the destination request information.

In step s103, the gateway discards the source request information and the destination request information when the checking result is undesirable.

Through the technical solution according to the embodiment of the present invention, the DNS selects the destination request information according to the source request information sent by the client, so as to establish a corresponding relation between the client and a server according to a matching relation between the source request information and the destination request information, thereby preventing DDOS attacks.

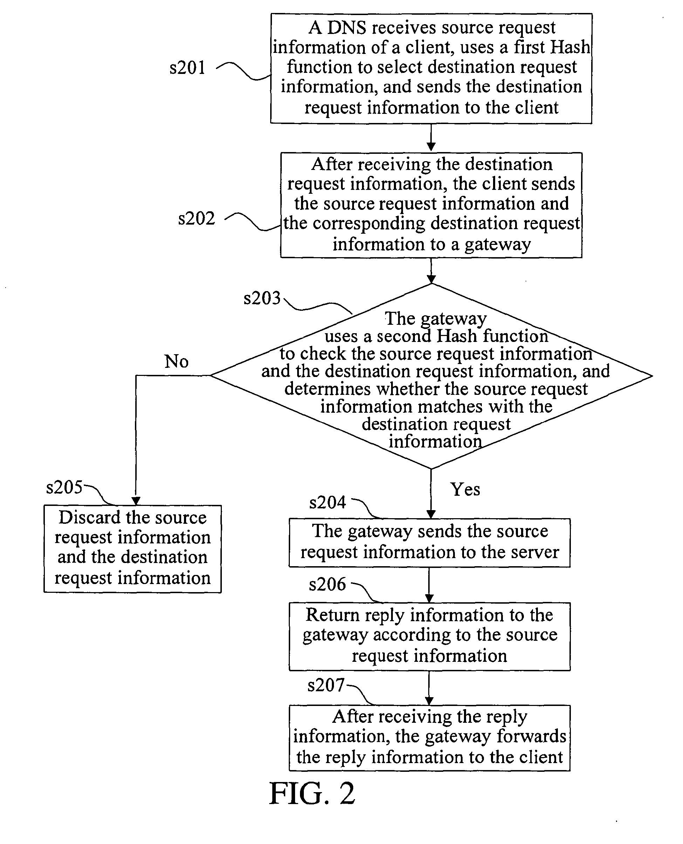

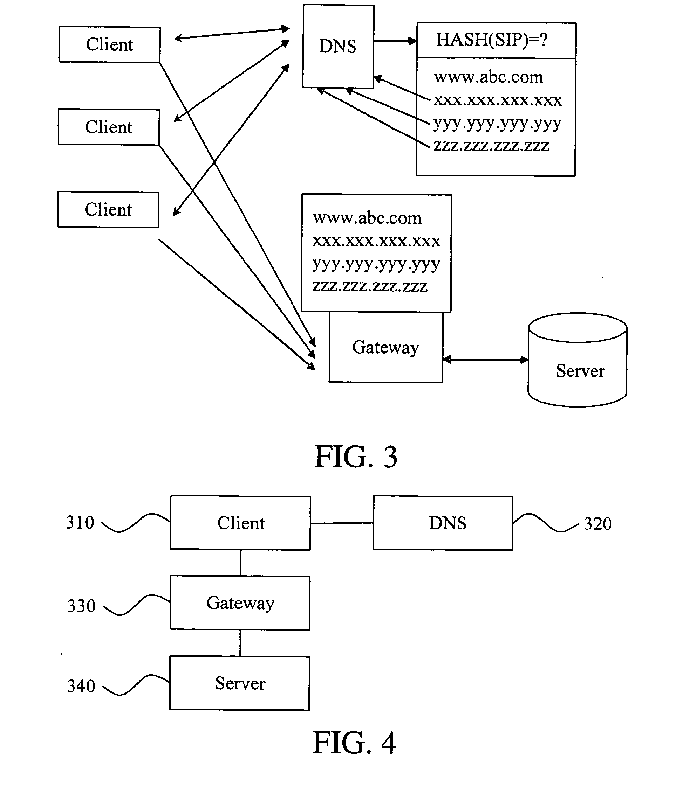

As shown in FIG. 2, in a second embodiment, the present invention provides a method for protection against network attacks, where the method includes the following steps. Reference may also be made to FIG 3, which is a schematic system diagram corresponding to the method.

In step s201, a DNS receives source request information of a client, uses a first Hash function to select destination request information, and sends the destination request information to the client. Specifically, the client sends a domain name of a server, such as a source IP (SIP) address corresponding to www.abc.com, to the DNS, and domain name resolution of the DNS server includes N IP addresses which are destination IPs (DIPs) corresponding to the SIP. The DNS executes a Hash operation on the SIP requested by the client to be queried, so as to map the SIP to one DIP of the N DIP addresses, and then the DNS server returns the DIP to the client through destination request information. Specifically, the Hash operation is: using the first Hash function to hash the SIP, and selecting the DIP corresponding to the SIP

In step s202, after receiving the destination request information, the client sends the source request information and the corresponding destination request information to a gateway. When accessing the DIP, the client actually accesses a gateway device connected in series with the server, and the gateway device is also bound to the N DIPs.

In step s203, the gateway uses a second Hash function to check the source request information and the destination request information, and determines whether the source request information matches with the destination request information, and if the source request information matches with the destination request information, step s204 is executed; if the source request information does not match with the destination request information, step s205 is executed. Specifically, when receiving an access request, the gateway device executes a Hash function operation on the SIP of the client again according to the Hash function of the DNS so as to obtain a DIP again, checks the DIP obtained after the Hash function operation and the accessing client's DIP generated at the DNS, and determines whether the client should access www.abc.com with the DIP. Specifically, the checking method is: executing an operation on the SIP according to the second Hash function, and determining whether a DIP, obtained after executing the operation on the SIP according to the second Hash function, matches with the DIP generated by the first Hash function in the DNS. Here, the first Hash function and the second Hash function are the same Hash function.

In step s204, if the source request information matches with the destination request information, the gateway sends the source request information to the server, and step s206 is executed. The gateway further uses the application proxy technology to forward the data to a server to be actually accessed by the client, so as to implement application proxy.

In step s205, if the source request information does not match with the destination request information, the gateway discards the source request information and the destination request information, and the process ends.

In step s206, after receiving the source request information forwarded by the gateway, the server returns reply information to the gateway according to the source request information.

In step s207, after receiving the reply information, the gateway forwards the reply information to the client.

When a DDOS attacking network attacks the server, an attacking host accesses the DNS as a normal user. After hashing an SIP of the attacking host, the DNS returns a DIP to the attacking host. After receiving the DIP, the attacking host sends the DIP address to a lot of attacking nodes in the attacking network, and the attacking nodes take the server corresponding to the DIP address as an attacking target, and send a lot of flood information to the attacked server. The information contains the DIP address and SIP addresses of the attacking nodes. The information is sent to the gateway before the server, and the gateway extracts the SIP addresses in the information, and hashes the SIPs by using the second Hash function of the gateway to obtain DIPs corresponding to the attacking nodes. Since the DIPs obtained according to the SIPs of the attacking nodes are different from the DIP previously obtained from the attacking host, the gateway detects that the DIP previously obtained from the SIP of the attacking host is different from the DIPs obtained from the SIPs of the attacking nodes, and thus abandons the flood information.

Although the above embodiments illustrate the methods for protection against the network attacks according to the present invention by taking the use of the first Hash function and the second Hash function for inter-conversion between SIPs and DIPs as an example, methods of inter-conversion between SIPs and DIPs are not limited to the Hash methods, and the use of other reversible algorithms to implement the present invention also falls within the protection scope of the present invention, which will not be repetitively described herein.

Through the technical solution according to the embodiment of the present invention, the destination request information is selected according to the Hash functions set on the gateway and the DNS and the source request information sent by the client, so as to establish a corresponding relation between the client and the server according to a matching relation between the source request information and the destination request information, thereby preventing DDOS attacks. The method can prevent large-scale attacks against the server, and alleviate the problem of flooding, so as to protect the server to be protected.

As shown in FIG. 4, in a third embodiment, the present invention provides a system for protection against network attacks, where the system includes a client 310, a DNS 320 and a gateway 330.

The client 310 is configured to send source request information to the DNS, receive destination request information selected by the DNS 320 according to the source request information, and send the source request information and the destination request information to the gateway 330.

The DNS 320 is configured to receive the source request information sent by the client, select the destination request information according to the source request information, and notify the destination request information to the client 310.

The gateway 330 is configured to receive the source request information and the destination request information that are sent by the client 310, check the source request information and the destination request information, and discard the source request information and the destination request information when the checking result is undesirable.

The system for protection against network attacks may further include a server 340.

The server 340 is configured to receive the source request information forwarded by the gateway 330 and send reply information to the gateway 330 when the checking result is that the source request information matches with the destination request information.

The gateway 330 is further configured to receive the reply information returned by the server 340 according to the source request information, and forward the reply information to the client 310.

The DNS 320 uses a first Hash function to hash the source request information, and selects the destination request information corresponding to the source request information.

The gateway 330 uses a second Hash function to hash the source request information, checks the source request information and the destination request information, and determines whether the source request information matches with the destination request information.

The first Hash function is corresponding to the second Hash function. The first Hash function is set on the DNS 320 and configured to select the destination request information corresponding to the source request information, and the second Hash function is configured to check the same source request information so as to determine whether the source request information matches with the destination request information. The first Hash function and the second Hash function are the same Hash function.

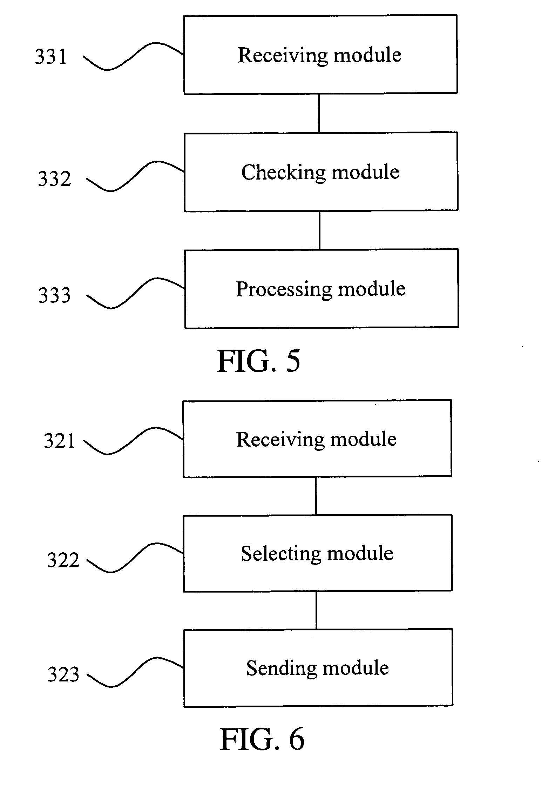

As shown in FIG. 5, the gateway 330 includes:
a receiving module 331, configured to receive the source request information and the destination request information that are sent by the client 310, where the destination request information is selected according to the source request information and notified to the client 310 by the DNS 320;
a checking module 332, configured to check the source request information and the destination request information; and
a processing module 333, configured to discard the source request information and the destination request information when the checking result is undesirable.

The checking, by the checking module 332, the source request information and the destination request information specifically includes:
using, by the checking module 332, the second Hash function to check the source request information and the destination request information, and determining whether the source request information matches with the destination request information; and
the processing module 333 is configured to discard the source request information and the destination request information when the checking result is that the source request information does not match with the destination request information; and send the source request information to the server when the checking result is that the source request information matches with the destination request information.

The processing module 333 is further configured to receive the reply information returned by the server 340 according to the source request information, and forward the reply information to the client 310.

A network card of the gateway device is bound to the N DIPs. When receiving an access request, the gateway device checks an SIP and a DIP of the accessing client according to the Hash function of the DNS, and determines whether the client should access www.abc.com with the DIP. If the checking result is that the source request information does not match with the destination request information, the request packet is discarded, and if the checking result is that the source request information matches with the destination request information, the data is forwarded to the actual server by using the application proxy technology, so as to implement application proxy.

As shown in FIG. 6, the DNS 320 includes:
a receiving module 321, configured to receive the source request information sent by the client;
a selecting module 322, configured to select the destination request information according to the source request information received; and
a sending module 323, configured to send the destination request information to the client.

The selecting module 322 uses the first Hash function to hash the source request information, and selects the destination request information corresponding to the source request information.

Through the technical solution according to the embodiment of the present invention, the destination request information is selected according to the Hash functions set on the gateway and the DNS and the source request information sent by the client, so as to establish a corresponding relation between the client and the server according to a matching relation between the source request information and the destination request information, thereby preventing DDOS attacks. The method can prevent large-scale attacks against the server, and alleviate the problem of flooding, so as to protect the server to be protected.

Through the descriptions of the preceding embodiments, those skilled in the art may understand clearly that the present invention may be implemented by using hardware only or by using software and a necessary universal hardware platform. Based on such understandings, the technical solution according to the present invention may be embodied in the form of a software product. The software product may be stored in a nonvolatile storage medium, which can be a Compact Disk Read-Only Memory (CD-ROM), Universal Serial Bus (USB) flash drive, or a removable hard drive. The software product includes a number of instructions that enable a computer device (personal computer, server, or network device) to execute the methods provided in the embodiments of the present invention.

It is understandable to those skilled in the art that the accompanying drawings are for illustrating the preferred embodiments only, and the modules or processes in the accompanying drawings are not mandatory.

It should be noted that the above descriptions are merely some exemplary embodiments of the present invention, and those skilled in the art may make various improvements and refinements without departing from the principle of the invention. All the modifications and refinements are intended to be covered by the present invention.

## Claims

1. A method for protection against network attacks, comprising:
receiving source request information and destination request information that are sent by a client, wherein the destination request information is notified by a Domain Name System (DNS) to the client sending the source request information;
checking the source request information and the destination request information; and
discarding the source request information and the destination request information when the checking result is undesirable.

2. The method according to claim 1, wherein the notifying, by the DNS, the destination request information to the client sending the source request information comprises:
receiving, by the DNS, the source request information sent by the client;
using, by the DNS, a first Hash function to execute a Hash function operation on the source request information, and selecting the destination request information corresponding to the source request information; and
sending, by the DNS, the source request information and the destination request information to the client.

3. The method according to claim 1, wherein the checking the source request information and the destination request information comprises:
using a second Hash function to determine whether the source request information matches with the destination request information, wherein the destination request information is the destination request information selected after using the first Hash function to execute the Hash operation on the source request information; and
the discarding the source request information and the destination request information when the checking result is undesirable comprises:
discarding the source request information and the destination request information if the checking result is that the source request information does not match with the destination request information.

4. The method according to claim 3, wherein the source request information is sent to a server if the checking result is that the source request information matches with the destination request information.

5. The method according to claim 4, wherein after the sending the source request information to the server, the method further comprises:
receiving reply information returned by the server according to the source request information; and
forwarding the reply information to the client.

6. The method according to claim 3, wherein the first Hash function and the second Hash function are the same Hash function.

7. A gateway, comprising:
a receiving module, configured to receive source request information and destination request information that are sent by a client, wherein the destination request information is notified by a Domain Name System (DNS) to the client sending the source request information;
a checking module, configured to check the source request information and the destination request information; and
a processing module, configured to discard the source request information and the destination request information when the checking result is undesirable.

8. The gateway according to claim 7, wherein the discarding, by the processing module, the source request information and the destination request information when the checking result is undesirable comprises: discarding, by the processing module, the source request information and the destination request information when the checking result is that the source request information does not match with the destination request information.

9. The gateway according to claim 7, wherein the processing module is further configured to send the source request information to a server when the checking result is that the source request information matches with the destination request information.

10. The gateway according to claim 9, wherein the processing module is further configured to receive reply information returned by the server according to the source request information, and forward the reply information to the client.

11. A system for protection against network attacks, comprising a client, a Domain Name System (DNS), and a gateway, wherein
the DNS is configured to receive source request information sent by the client, select destination request information according to the source request information, and notify the destination request information to the client, and the client sends the source request information and the destination request information to the gateway; and
the gateway is configured to receive the source request information and the destination request information that are sent by the client, check the source request information and the destination request information, and discard the source request information and the destination request information when the checking result is undesirable.

12. The system according to claim 11, comprising:
a server, configured to receive the source request information forwarded by the gateway and send reply information to the gateway when the checking result is desirable.

13. The system according to claim 12, wherein the gateway receives the reply information returned by the server according to the source request information, and forwards the reply information to the client.
